# FASCICULE DE BREVET EUROPEEN

(11) **EP 0 654 401 B1**
(45) Date de publication et mention de la délivrance du brevet: **29.07.1998**
(21) Numéro de dépôt: 94402606.1
(22) Date de dépôt: 17.11.1994
(51) Int. Cl.: B63G 9/02, F41J 9/04, F41J 2/00, G01S 7/52

(54) **Procédé de protection d'un navire contre un attaquant et dispositif de protection correspondant**
Verfahren zum Schützen eines Schiffes gegen einen Angreifer und Schutzgerät dafür
Method of protecting a ship against an attacker, and protection device therefor

(30) Priorité: 19.11.1993 FR 9313821
(43) Date de publication de la demande: 24.05.1995
(73) Titulaire: ETAT-FRANCAIS représenté par le DELEGUE GENERAL POUR L'ARMEMENT (DPAG), F-00460 Paris Armées (FR)
(72) Inventeur: Le Dard, Michele, F-83120 Sainte Maxime (FR); Charlot, Yves, F-83240 Cavalaire (FR); Wagner, Jean Marie, F-83240 Cavalaire (FR)

(56) Documents cités:
- DE-A- 3 300 067
- FR-A- 2 514 319
- US-A- 3 921 559
- US-A- 5 144 587
- INTERNATIONAL DEFENSE REVIEW, vol.24, no.6, 1991, GENEVA page 663, XP2402 'First glimpse of Israeli sub-decoy'

## Description

L'invention concerne un procédé de protection d'un navire contre un attaquant.

Le domaine technique de l'invention est celui des navires submersibles ou non, et celui des aménagements défensifs sur lesdits navires, notamment contre les sous-marins ou les torpilles.

L'application principale de l'invention est la lutte contre les torpilles, plus particulièrement en les attirant vers un but fictif éloigné du navire sur lequel elles ont été tirées.

Il est connu dans l'art militaire de leurrer l'ennemi en lui présentant de fausses cibles qu'il confond avec les vraies et sur lesquelles il concentre son tir, ce qui ne présente pas de risques pour la vraie cible. C'est ainsi que les avions peuvent larguer des artifices qui brûlent en émettant beaucoup d'infrarouges, ce qui attire les missiles guidés par infrarouge. Dans le domaine naval on sait aussi leurrer ou brouiller les torpilles, en particulier celles du type passif, en larguant une bouée qui émet des signaux acoustiques ressemblant à ceux du navire porteur, mais à un niveau nettement supérieur à ces derniers. La torpille se dirige vers cette bouée, et lorsqu'elle arrive à proximité de celle-ci, le bâtiment s'est suffisamment éloigné pour diminuer considérablement les risques d'être touché. Le risque n'est toutefois pas nul car on peut très bien, à l'aide d'une logique relativement sommaire, lorsque la torpille a dépassé la bouée, la réorienter en lui faisant décrire un cercle vers une autre source qui pourra être le navire porteur.

Des dispositifs spécifiques ont alors été développés. On peut citer par exemple la demande de brevet FR-A-2 660 907 déposée le 13 avril 1990 par la société THOMSON-CSF sur un procédé de lutte contre les torpilles, qui permet de leurrer les torpilles se dirigeant vers un bateau. Le procédé consiste à munir un leurre connu avec une charge explosive et un sonar permettant de détecter le passage de la torpille à proximité du leurre. On fait exploser la charge lorsque la torpille passe au plus près et cette explosion entraîne la destruction de la torpille.

Tout en ayant l'avantage de compléter l'opération de leurrage par une opération de destruction, ce procédé présente aussi des inconvénients. Par exemple, le risque de provoquer une explosion intempestive n'est pas négligeable lorsque le leurre-piège largué après une alarme-torpille dans le navire porteur a une durée de fonctionnement prédéterminée, ce qui est le cas lorsqu'on le largue sans espoir de le récupérer.

On pourrait citer aussi des procédés utilisant des leurres autopropulsés, de manière à simuler la cible réelle. Toutefois, les dimensions d'une telle cible autopropulsée sont toujours trop petites pour crédibiliser une telle simulation.

On connaît également le brevet US-A-5 144 587 qui décrit un dispositif tracté ou autonome largué depuis un sous-marin ou un navire, capable de représenter une cible étendue réaliste pour un sonar acoustique classique et/ou à détection de sillage. Ce dispositif déploie et traîne derrière lui un réseau de câbles formant un rideau actif capable de leurrer les différents senseurs d'une torpille.

Ce dispositif présente l'inconvénient majeur de traîner les moyens de leurrage derrière lui, sans effectuer un deuxième largage d'éléments actifs le long de sa trajectoire, ce qui limite considérablement sa crédibilité et le masquage de la cible réelle.

La présente invention a pour objectif un procédé de protection d'un navire contre un attaquant, comprenant un premier largage, depuis ledit navire attaqué, d'un dispositif automoteur sous-marin.

La présente invention a pour objectif de proposer un procédé de protection du type précité, ne présentant pas les inconvénients indiqués ci-dessus, et qui permette de crédibiliser la cible artificielle.

Conformément à l'invention, cet objectif est atteint du fait que le procédé de protection d'un navire du type précité comprend ou outre au moins un deuxième largage, depuis ledit dispositif automoteur sous-marin, d'au moins un leurre et/ou brouilleur susceptible d'émettre un signal acoustique de leurrage et/ou de brouillage.

Le procédé de protection d'un navire conçu conformément à l'invention, présente un certain nombre d'avantages. Grâce à l'étape du deuxième largage, depuis le dispositif automoteur sous-marin, d'au moins un leurre et/ou brouilleur susceptible d'émettre un signal acoustique de leurrage, le procédé de l'invention permet à la fois un effet de brouillage, un effet de bruitage, et un effet de masque de la vraie cible, tout en crédibilisant la cible artificielle.

Les avantageuses dispositions suivantes sont en outre de préférence adoptées :
- ledit procédé comprend en outre l'écoute d'un signal acoustique de détection émis par ledit attaquant et l'émission d'un écho de leurrage en réponse audit signal acoustique de détection ;
- ledit procédé comprend en outre l'émission d'un brouillage préalable audit largage du dispositif automoteur sous-marin ;
- ledit procédé comprend en outre l'émission par ledit dispositif automoteur sous-marin d'un signal acoustique de leurrage et/ou de brouillage, laquelle émission est simultanée ou différée par rapport à ladite émission d'un écho de leurrage en réponse audit signal acoustique de détection ;
- ledit procédé comprend en outre la détermination des paramètres desdits largages, des paramètres d'émission dudit signal acoustique de leurrage et/ou de brouillage, et des paramètres de pilotage de l'objectif attaqué et du dispositif automoteur sous-marin, de telle sorte que l'objectif attaqué et le dispositif sous-marin s'éloignent l'un de l'autre de manière à obtenir un effet de masque ;
- ladite détermination des paramètres est programmée préalablement audit largage du dispositif automoteur sous-marin, de telle sorte que ledit dispositif automoteur est autonome.

La présente invention vise non seulement le procédé de protection d'un navire mentionné ci-dessus, mais également un dispositif automoteur sous-marin de protection d'un navire contre un attaquant, ledit dispositif comprenant une unité de commande électronique et un élément automoteur, et comprenant en outre au moins un élément remorqué par ledit élément automoteur, au moins un câble de remorque interposé entre lesdits éléments, ledit élément remorqué comprenant au moins un leurre et/ou brouilleur largable, lequel leurre et/ou brouilleur comporte un émetteur de signal acoustique de leurrage et/ou de brouillage, ledit dispositif étant apte à être utilisé pour la mise en oeuvre du procédé de l'invention.

Les avantageuses dispositions suivantes du dispositif automoteur sous-marin sont en outre de préférence adoptées :
- ledit dispositif comporte en outre au moins un hydrophone d'écoute susceptible de recevoir un signal acoustique de détection émis par ledit attaquant, et au moins un émetteur acoustique actif, susceptible d'émettre un écho de leurrage en réponse audit signal acoustique de détection ;
- ledit émetteur est aussi apte à émettre simultanément ou non audit écho de leurrage un signal acoustique ou bruit de leurrage pour sonar passif ou un bruit de brouillage ;
- ledit élément automoteur comprend ledit émetteur acoustique actif ;
- ledit élément remorqué comprend ledit hydrophone d'écoute ;
- ledit câble de remorque comprend un moyen de transmission de données, et un moyen d'alimentation en énergie ;
- ledit élément remorqué comprend au moins un moyen d'attaché dudit leurre et/ou brouilleur, lequel moyen d'attache est libérable lors du largage dudit leurre et/ou brouilleur ;
- ledit câble de remorque a une longueur sensiblement comprise entre 10 et 80 mètres.

Les modes de réalisation préférentiels de l'invention présentent un certain nombre d'avantages. Le largage d'un seul engin permet les largages successifs de plusieurs leurres et/ou brouilleurs et le nombre de manipulations est ainsi diminué. L'application de ce type de protection aux sous-marins est facilitée. On obtient de manière simple une zone masquée importante, sans aucun trou dans la protection. Il est possible de simuler de manière crédible la coque d'un navire. Le même dispositif est utilisable aussi bien par des bâtiments de surface que par des sous-marins. L'invention se combine aisément à d'autres stratégies classiques.

L'invention sera mieux comprise et d'autres caractéristiques et leurs avantages apparaîtront à la lecture de la description des modes de réalisation donnés ci-après à titre d'exemples.

Il sera fait référence aux dessins annexés dans lesquels :
- la figure 1 est une vue en coupe illustrant un mode de réalisation préférentiel d'un dispositif automoteur sous-marin de protection d'un navire selon l'invention ;

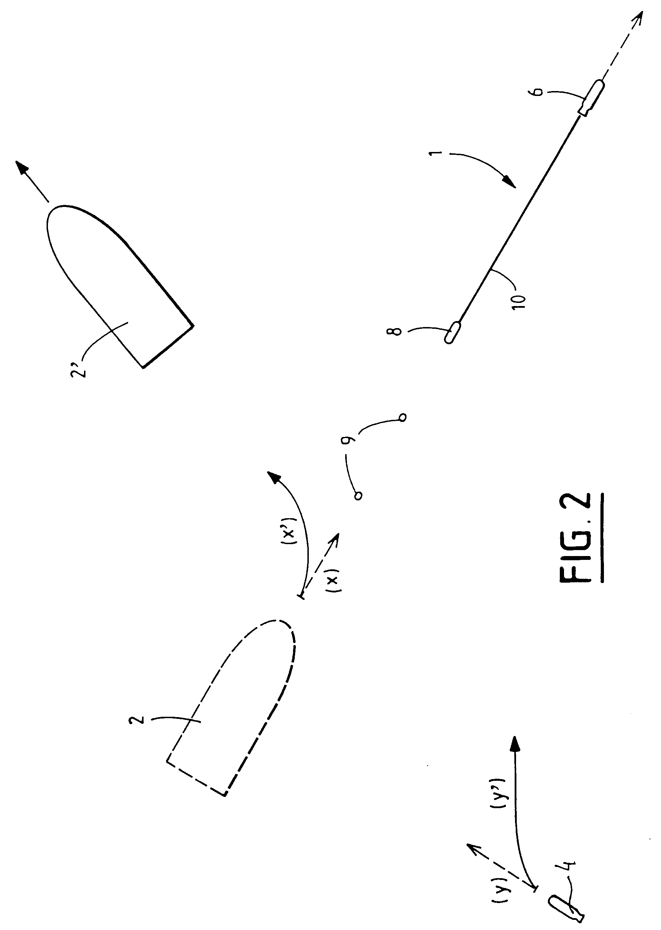

- la figure 2 est une vue de dessus illustrant un navire ayant mis en oeuvre le procédé de protection de l'invention, contre un attaquant.

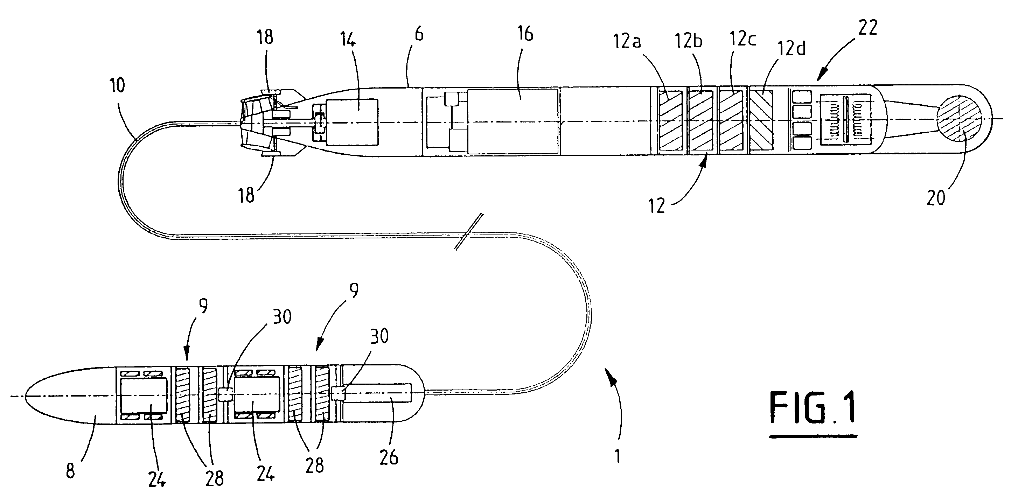

On se réfère d'abord plus particulièrement à la figure 1 des dessins ; le dispositif automoteur sous-marin 1 de protection d'un navire qui y est représenté, comporte un élément automoteur 6 en forme de torpille et un élément remorqué 8 par ledit automoteur 6, un câble de remorque 10 étant interposé entre lesdits éléments automoteur et remorqué.

L'élément remorqué 8 contient deux leurres ou brouilleurs 9 largables successivement. Selon d'autres modes de réalisation de l'invention, un leurre ou brouilleur ou plus de deux leurres ou brouilleurs sont utilisés.

L'élément automoteur 6, préférentiellement en forme de torpille, contient dans sa partie frontale, un émetteur acoustique actif 20 susceptible d'émettre un écho de leurrage en réponse à un signal acoustique de détection émis par l'attaquant et qui a été reçu par un hydrophone d'écoute 26 décrit ci-après, de manière à simuler la présence de la coque de la vraie cible. Alternativement, I'émetteur acoustique actif 20 a également pour fonction la simple émission d'un signal acoustique de leurrage tel qu'un bruit, de manière à simuler le bruit émis par le navire attaqué, ou l'émission d'un signal acoustique de brouillage tel qu'un bruit de forte puissance.

Un variateur de puissance 22 disposé à l'intérieur de l'élément automoteur 6 est destiné à moduler la puissance de l'émetteur acoustique actif 20.

L'élément automoteur 6 comporte en outre un moteur de propulsion 14, une source d'énergie 16 telle qu'une batterie, et divers moyens de propulsion et de direction, tels qu'une hélice, des ailerons, et des gouvernes de direction 18.

L'élément automoteur 6 comporte en outre une unité de commande électronique 12. Telle que représentée, I'unité de commande électronique 12 comporte trois éléments électroniques 12a, 12b, 12c, et un quatrième élément électronique 12d destiné à la commande de la puissance. L'unité de commande électronique 12 permet notamment la programmation et la réception de données acoustique, la commande de l'acoustique frontale 20, la réception de donnés provenant de l'élément remorqué 8, la commande du corps remorqué 8, et la commande des moyens de propulsion et de manoeuvre de l'élément automoteur 6.

La câble de remorque 10 comprend un moyen de transmission de données destiné à transmettre divers signaux, tels que particulièrement les signaux de surveillance des différentes fonctions des leurres et/ou brouilleurs 9 et de l'hydrophone d'écoute 26. La transmission des données est possible dans les deux sens. La câble de remorque 10 comporte également un moyen d'alimentation en énergie électrique de l'élément remorqué 8 et des leurres et/ou brouilleurs 9.

L'élément remorqué 8 comporte dans sa partie frontale un hydrophone d'écoute 26 destiné à l'écoute d'un signal acoustique de détection émis par un attaquant 4, par exemple le sonar d'un sous-marin ou d'une torpille. Il est à noter que selon un mode de réalisation préférentielle, l'hydrophone d'écoute est disposé dans l'élément remorqué et l'émetteur acoustique actif 20 est disposé dans l'élément automoteur 6, de manière à être distants l'un de l'autre. Selon d'autres modes de réalisation non représentées, l'hydrophone d'écoute est disposé dans l'élément automoteur 6 et l'émetteur acoustique actif est disposé dans l'élément remorqué 8. Alternativement, l'hydrophone d'écoute et l'émetteur acoustique actif sont disposés dans le même élément.

Chaque leurre ou brouilleur 9 comporte un émetteur 24 de signal acoustique de leurrage ou de brouillage, susceptible de générer de manière permanente ou non des bruits acoustiques dans une gamme de fréquence correspondant aux bandes de fréquence de fonctionnement des autodirecteurs de torpille par exemple.

Chaque leurre ou brouilleur 9 comporte en outre un ou plusieurs éléments de commande électronique 28, tels que les éléments 12a, 12b, 12c, 12d décrits ci-dessus. Les moyens d'attache 30 libérables lors des largages successifs des leurres ou brouilleurs 9, permettant d'une part la séparation des leurres ou brouilleurs entre eux, et d'autre part le largage proprement dit depuis l'élément remorqué 8.

Chaque leurre ou brouilleur 9 dispose d'une capacité d'énergie autonome.

Les leurres ou brouilleurs 9 sont préférentiellement construits de telle manière que leur flottabilité soit sensiblement neutre, afin de leur permettre de flotter entre deux eaux, sensiblement au niveau d'immersion du dispositif automoteur sous-marin 1, lorsqu'il les a largués.

Les caractéristiques de flottabilité et d'hydrodynamisme de l'élément remorqué 8 sont choisies de manière à favoriser le remorquage, l'élément remorqué 8 ayant une flottabilité sensiblement neutre. Quant à l'élément automoteur 6, ses caractéristiques de flottabilité et d'hydrodynamisme sont sensiblement analogues à celles d'une torpille de type connu.

Préférentiellement, les diamètres de l'élément automoteur 6 et de l'élément remorqué 8 sont de l'ordre de 0,12 à 0,15 mètre ; la longueur de l'élément automoteur 6 est de l'ordre de 1,20 mètre ; la longueur de l'élément remorqué est de l'ordre de 0,80 mètre dans le cas de la présence de deux leurres ou brouilleurs 9 ; et le câble de remorque a une longueur sensiblement comprise en entre 10 et 80 mètres. On se réfère plus particulièrement à la figue 2 des dessins, de manière à décrire ci-après un procédé préférentiel de protection d'un navire 2 contre un attaquant 4.

De manière à se protéger contre un attaquant 4, par exemple une torpille ou un sous-marin, un navire 2 tel qu'un sous-marin ou un bâtiment de surface, largue dans un premier temps le dispositif automoteur sous-marin 1 de l'invention, qui comporte un élément automoteur 6, un câble de remorque 10, et un élément remorqué 8.

Une deuxième étape du procédé de protection consiste à larguer depuis l'élément remorqué 8 successivement deux leurres ou brouilleurs 9.

L'ensemble constitué par le dispositif automoteur sous-marin 1 et les leurres ou brouilleurs 9 constitue ainsi un masque destiné à protéger le navire 2' ayant infléchi sa route depuis un cap initial x vers un nouveau cap x'.

L'attaquant 4 ne poursuit donc plus le navire à protéger 2 selon la direction y mais infléchit sa route selon la direction y', l'ensemble constitué par le dispositif automoteur sous-marin 1 et les leurres ou brouilleurs largués 9 constituant une cible crédible.

Préférentiellement, le procédé de protection comprend en outre l'émission d'un brouillage de type connu préalable au largage du dispositif automoteur sous-marin 1.

Le procédé de l'invention comprend également la programmation du calcul des paramètres d'émission acoustique, des paramètres des largages, et des paramètres de pilotage du navire attaqué 2 et du dispositif automoteur sous-marin 1, préalablement au largage du dispositif automoteur sous-marin 1.

Pour larguer le dispositif automoteur sous-marin 1 depuis un bâtiment de surface 2, on utilise par exemple un dispositif analogue au lanceur de grenades sous-marines. Alternativement, pour protéger à l'aide d'un tel dispositif les sous-marins contre des torpilles 4 destinées à les attaquer, le dispositif automoteur sous-marin 1 de protection est adapté de manière à être lancé à l'aide des tubes lance-torpilles du sous-marin 2, ou à l'aide d'autres types de tubes préexistants.

De manière à ce que l'objectif attaqué 2, 2' et le dispositif automoteur sous-marin 1 s'éloignent l'un de l'autre afin d'obtenir un effet de masque, un dispositif (non représenté) comprend un élément automoteur 6 muni d'au moins un aileron fixe légèrement désaxé de manière à ce que le dispositif automoteur sous-marin 1 dévie légèrement de son erre et s'écarte de la trajectoire du sous-marin 2, en profitant de la vitesse acquise lors du lancement.

La durée de la procédure de protection du navire est de l'ordre de 15 minutes et est déterminée de manière à être compatible avec la durée de la menace.

Bien qu'on est décrit la procédé de protection d'un navire contre un attaquant selon l'invention dans son application à un attaquant de type sous-marin, il faut noter que l'invention a des applications plus générales. Un procédé de protection d'un navire selon l'invention peut s'appliquer à un attaquant de type bâtiment de surface, l'objectif attaqué étant de type sous-marin.

Bien entendu, diverses modifications peuvent être apportées par l'homme de l'art au procédé de protection d'un navire contre un attaquant et au dispositif automoteur sous-marin qui viennent d'être décrits, uniquement à titre d'exemple non limitatif, sans sortir du cadre de protection défini par les revendications annexées.

## Revendications

1. Procédé de protection d'un navire (2, 2') contre un attaquant (4) comprenant un premier largage, depuis ledit navire attaqué (2) d'un dispositif automoteur sous-marin (1), caractérisé en ce que ledit procédé comprend en outre au moins un deuxième largage, depuis ledit dispositif automoteur sous-marin (1), d'au moins un leurre et/ou brouilleur (9) susceptible d'émettre un signal acoustique de leurrage et/ou brouillage, chaque leurre et/ou brouilleur étant déconnecté du dispositif automoteur sous-marin (1) lors du largage.

2. Procédé de protection d'un navire (2, 2') contre un attaquant (4) selon la revendication 1, caractérisé en ce que ledit procédé comprend en outre l'écoute d'un signal acoustique de détection émis par ledit attaquant (4) et l'émission d'un écho de leurrage en réponse audit signal acoustique de détection.

3. Procédé de protection d'un navire (2, 2') contre un attaquant (4) selon l'une quelconque des revendications 1 et 2, caractérisé en ce que ledit procédé comprend en outre l'émission d'un brouillage préalable audit largage du dispositif automoteur sous-marin (1).

4. Procédé de protection d'un navire (2, 2') contre un attaquant (4) selon l'une quelconque des revendications 2 à 3, caractérisé en ce que ledit procédé comprend en outre l'émission par ledit dispositif automoteur sous-marin (1) d'un signal acoustique ou bruit de leurrage et/ou de brouillage, laquelle émission est simultanée ou différée par rapport à ladite émission d'un écho de leurrage en réponse audit signal acoustique de détection.

5. Procédé de protection d'un navire (2, 2') contre un attaquant (4) selon l'une quelconque des revendications 1 à 4, caractérisé en ce que ledit procédé comprend en outre la détermination des paramètres desdits largages, des paramètres d'émission dudit signal acoustique de leurrage et/ou de brouillage, et des paramètres de pilotage du navire attaqué (2) et du dispositif automoteur sous-marin (1), de telle sorte que le navire attaqué (2') et le dispositif sous-marin (1) s'éloignent l'un de l'autre de manière à obtenir un effet de masque.

6. Procédé de protection d'un navire (2, 2') contre un attaquant (4) selon la revendication 5, caractérisé en ce que ladite détermination des paramètres est programmée préalablement audit largage du dispositif automoteur sous-marin (1), de telle sorte que ledit dispositif automoteur (1) est autonome.

7. Dispositif automoteur sous-marin (1) de protection d'un navire (2, 2') contre un attaquant (4), ledit dispositif comprenant une unité de commande électronique (12) et un élément automoteur (6), caractérisé en ce que ledit dispositif automoteur sous-marin (1) comprend en outre au moins un élément remorqué (8) par ledit élément automoteur (6), au moins un câble de remorque (10) interposé entre lesdits éléments (6,8), ledit élément remorqué comprenant au moins un leurre et/ou brouilleur (9), lequel leurre et/ou brouilleur (9) comporte un émetteur (24) de signal acoustique de leurrage et/ou de brouillage et peut être déconnecté par largage de l'élément remorqué (8).

8. Dispositif automoteur sous-marin (1) de protection d'un navire (2, 2') contre un attaquant (4), selon la revendication 7, caractérisé en ce que ledit dispositif comporte en outre au moins un hydrophone d'écoute (26) susceptible de recevoir un signal acoustique de détection émis par ledit attaquant (4), et au moins un émetteur acoustique actif (20), susceptible d'émettre un écho de leurrage en réponse audit signal acoustique de détection, et susceptible d'émettre un signal acoustique ou bruit de leurrage et/ou de brouillage.

9. Dispositif automoteur sous-marin (1) de protection d'un navire (2, 2') contre un attaquant (4), selon la revendication 8, caractérisé en ce que ledit élément automoteur (6) comprend ledit émetteur acoustique actif (20).

10. Dispositif automoteur sous-marin (1) de protection d'un navire (2, 2') contre un attaquant (4), selon l'une quelconque des revendications 8 et 9, caractérisé en ce que ledit élément remorqué (8) comprend ledit hydrophone d'écoute (26).

11. Dispositif automoteur sous-marin (1) de protection d'un navire (2, 2') contre un attaquant (4), selon l'une quelconque des revendications 7 à 10, caractérisé en ce que ledit câble de remorque (10) comprend un moyen de transmission de données, et un moyen d'alimentation en énergie.

12. Dispositif automoteur sous-marin (1) de protection d'un navire (2, 2') contre un attaquant (4), selon l'une quelconque des revendications 7 à 11, caractérisé en ce que ledit élément remorqué (8) comprend au moins un moyen d'attache (30) dudit leurre et/ou brouilleur (9), lequel moyen d'attache est libérable lors du largage dudit leurre et/ou brouilleur.

13. Dispositif selon l'une quelconque des revendications 7 à 12, caractérisé en ce que ledit câble de remorque (10) a une longueur sensiblement comprise en 10 et 80 mètres.

## Claims

1. A process for protecting a ship 2, 2' against an attacker 4, comprising a first dropping from the said attacked ship 2, a self-propelled submarine device 1 characterised in that in addition the said process comprises at least a second dropping from the said self-propelled submarine device 1 of at least one decoy and/or jammer 9 likely to emit a luring and/or jamming acoustic signal, each decoy and/or jammer being deconnected from the self-propelled submarine device 1 during the dropping.

2. A process for protecting a ship 2, 2' against an attacker 4 according to claim 1, characterised in that in addition the said process consists in listening an acoustic signal of detection emitted by the said attacker 4 and emitting a luring echo in response to the said acoustic signal of detection.

3. A process for protecting a ship 2, 2' against an attacker 4, according to any of claims 1 and 2, characterised in that in addition the said process consists in emitting a jammer prior to the said dropping of the self-propelled submarine device 1.

4. A process for protecting a ship 2, 2' against an attacker 4 according to any of claims 2 to 3, characterised in that in addition the said process comprises the emission of an acoustic signal or luring and/or jamming noise emitted by the said self-propelled submarine device 1, the said emission being simultaneous or deferred in relation to the said emission of a luring echo in response to the said acoustic signal of detection.

5. A process for protecting a ship 2, 2' against an attacker 4 according to any of claims 1 to 4 characterised in that in addition the said process consists in determining the parameters of the said dropping operation, the parameters of emission of the said luring and/or jamming acoustic signal and the piloting parameters of the attacked ship 2 and the self-propelled submarine device 1, so that the attacked ship 2' and the submarine device 1 move sufficiently away from each other to achieve a mask effect.

6. A process for protecting a ship 2, 2' against an attacker 4 according to claim 5 characterised in that the said determination of the parameters is programmed prior to the said dropping of the self-propelled submarine 1 so that the said self-propelled device 1 is autonomous.

7. A self-propelled submarine device 1 for protecting a ship 2, 2' against an attacker 4, the said device comprising an electronic control unit 12 and a self-propelled element 6, characterised in that the said self-propelled submarine device 1 comprises in addition at least one element 8 towed by the self-propelled element 6, at least one towing cable 10 interposed between the said elements 6, 8, the said towed element comprising at least one decoy and/or jammer (9), the said decoy and/or jammer 9 comprises one emitter 24 of luring and/or jamming acoustic signal and can possibly be disconnected by dropping towed element 8.

8. A self-propelled submarine device 1 for protecting a ship 2, 2' against an attacker 4,, according to claim 7, characterised in that in addition the said device comprises at least one listening hydrophone 26 which can receive an acoustic signal of detection emitted by the said attacker 4, and at least one active acoustic signal 20, capable of emitting a luring echo in response to the said acoustic signal of detection, and capable of emitting a luring and/or jamming acoustic signal.

9. A self-propelled submarine device 1 for protecting a ship 2, 2' against an attacker 4, according to claims 8, characterised in that the said self-propelled element 6 comprises the said active acoustic emitter 20.

10. A self-propelled submarine device 1 for protecting a ship 2, 2' against an attacker 4, according to any of claims 8 and 9, characterised in that the said towed element 8 comprises the said listening hydrophone 26.

11. A self-propelled submarine device 1 for protecting a ship 2, 2' against an attacker 4, according to any of claims 7 to 10, characterised in that the said towing cable 10 comprises a means of data transmission and a power supply means.

12. A self-propelled submarine device 1 for protecting a ship 2, 2' against an attacker 4, according to any of claim 7 to 11, characterised in that the said towed element 8 comprises at least one fastening means 30 of the said decoy and/or jammer 9, the said fastening means being releasable during the dropping operation of the said decoy and/or jammer.

13. A device according to any of claims 7 to 12, characterised in that the length of the said towing cable 10 is approximately included between 10 and 80 meters.

## Patentansprüche

1. Verfahren zum Schutz eines Schiffes (2, 2') gegen einen Angreifer (4), wobei das besagte angegriffene Schiff (2) einen ersten Abschuß einer selbstfahrenden Unterwasser-Vorrichtung (1) vornimmt, dadurch gekennzeichnet, daß das besagte Verfahren zusätzlich mindestens einen zweiten Abschuß von der besagten selbstfahrenden Unterwasser-Vorrichtung (1) von mindestens einer Attrappe und/oder einem Störkörper (9) umfaßt, welche in der Lage ist, ein akustisches Täusch- und/oder Störsignal auszusenden, wobei jede Attrappe und/oder jeder Störkörper bei Abschuß von der selbstfahrenden Unterwasser-Vorrichtung getrennt wird.

2. Verfahren zum Schutz eines Schiffes (2, 2') gegen einen Angreifer (4) gemäß Patentanspruch 1, dadurch gekennzeichnet, daß das besagte Verfahren außerdem einen Schallempfänger für das vom besagten Angreifer (4) ausgesendete akustische Ortungssignal sowie eine Sendevorrichtung für ein Täuschecho als Antwort auf das besagte akustische Ortungssignal umfaßt.

3. Verfahren zum Schutz eines Schiffes (2, 2') gegen einen Angreifer (4) gemäß irgendeinem der Patentansprüche 1 und 2, dadurch gekennzeichnet, daß das besagte Verfahren außerdem das Aussenden einer Störung vor dem besagten Abschuß der selbstfahrenden Unterwasser-Vorrichtung (1) umfaßt.

4. Verfahren zum Schutz eines Schiffes (2, 2') gegen einen Angreifer (4) gemäß irgendeinem der Patentansprüche 2 bis 3, dadurch gekennzeichnet, daß das besagte Verfahren außerdem das Aussenden, von der selbstfahrenden Unterwasser-Vorrichtung (1) aus, eines akustischen Signals oder eines Täusch- und/oder Störgeräusches umfaßt, wobei dieses Aussenden simultan oder zeitlich verschoben im Verhältnis zum besagten Aussenden eines Täuschechos in Antwort auf das besagte akustische Ortungssignal erfolgt.

5. Verfahren zum Schutz eines Schiffes (2, 2') gegen einen Angreifer (4) gemäß irgendeinem der Patentansprüche 1 bis 4, dadurch gekennzeichnet, daß das besagte Verfahren außerdem die Bestimmung der Parameter der besagten Abschüsse, der Sende-Parameter des besagten akustischen Täusch- und/oder Störsignals sowie der Parameter für das Steuern des angegriffenen Schiffs (2) und der selbstfahrenden Unterwasser-Vorrichtung (1) umfaßt, so daß das angegriffene Schiff (2') und die selbstfahrende Unterwasser-Vorrichtung (1) sich voneinander entfernen, um so einen Maskeneffekt zu erzielen.

6. Verfahren zum Schutz eines Schiffes (2, 2') gegen einen Angreifer (4) gemäß Patentanspruch 5, dadurch gekennzeichnet, daß die besagte Bestimmung der Parameter vor dem besagten Abschuß der selbstfahrenden Unterwasser-Vorrichtung (1) programmiert ist, so daß die besagte selbstfahrende Vorrichtung (1) autonom ist.

7. Selbstfahrende Unterwasser-Vorrichtung (1) zum Schutz eines Schiffes (2, 2') gegen einen Angreifer (4), wobei die besagte Vorrichtung eine elektronische Steuereinheit (12) und ein Selbstantriebselement (6) umfaßt, dadurch gekennzeichnet, daß die besagte selbstfahrende Unterwasser-Vorrichtung (1) außerdem mindestens ein vom besagten selbsttätigen Element (6) geschlepptes Element (8), mindestens ein zwischen den besagten Elementen (6, 8) liegendes Schlepptau umfaßt, wobei das besagte geschleppte Element mindestens eine Attrappe und/oder einen Störkörper (9) enthält; diese Attrappe und/oder dieser Störkörper (9) enthält einen Sender (24) für ein akustisches Täusch- und/oder Störsignal und kann durch Abschuß des geschleppten Elementes (8) getrennt werden.

8. Selbstfahrende Unterwasser-Vorrichtung (1) zum Schutz eines Schiffes (2, 2') gegen einen Angreifer (4) gemäß Patentanspruch 7, dadurch gekennzeichnet, daß die besagte Vorrichtung zusätzlich mindestens einen Unterwasserschallempfänger (26) umfaßt, welcher fähig ist, ein vom besagten Angreifer (4) ausgesendetes akustisches Ortungssignal zu empfangen, sowie mindestens einen aktiven akustischen Sender (20), der in der Lage ist, ein Täuschecho als Antwort auf das besagte akustische Ortungssignal sowie ein akustisches Täusch- und/oder Störsignal oder -geräusch zu senden.

9. Selbstfahrende Unterwasser-Vorrichtung (1) zum Schutz eines Schiffes (2, 2') gegen einen Angreifer (4) gemäß Patentanspruch 8, dadurch gekennzeichnet, daß das besagte selbsttätige Element (6) den besagten aktiven akustischen Sender (20) enthält.

10. Selbstfahrende Unterwasser-Vorrichtung (1) zum Schutz eines Schiffes (2, 2') gegen einen Angreifer (4) gemäß irgendeinem der Patentansprüche 8 und 9, dadurch gekennzeichnet, daß das besagte geschleppte Element (8) den besagten Unterwasserschallempfänger (26) umfaßt.

11. Selbstfahrende Unterwasser-Vorrichtung (1) zum Schutz eines Schiffes (2, 2') gegen einen Angreifer (4) gemäß irgendeinem der Patentansprüche 7 bis 10, dadurch gekennzeichnet, daß das besagte Schlepptau (10) eine Datenübertragungs- sowie eine Energieversorgungsvorrichtung umfaßt.

12. Selbstfahrende Unterwasser-Vorrichtung (1) zum Schutz eines Schiffes (2, 2') gegen einen Angreifer (4) gemäß irgendeinem der Patentansprüche 7 bis 11, dadurch gekennzeichnet, daß das besagte geschleppte Element (8) mindestens eine Befestigungsvorrichtung (30) für die besagte Attrappe und/oder den besagten Störkörper (9) enthält, wobei diese Befestigungsvorrichtung bei Abschuß der besagten Attrappe und/oder des besagten Störkörpers lösbar ist.

13. Vorrichtung gemäß irgendeinem der Patentansprüche 7 bis 12, dadurch gekennzeichnet, daß das besagte Schlepptau (10) eine Länge von 10 bis 80 Meter aufweist.
